## Europäisches Patentamt

## European Patent Office

## Office européen des brevets

(19)

(11) Veröffentlichungsnummer: **0 012 974**
**B1**

(12) **EUROPÄISCHE PATENTSCHRIFT**

(45) Veröffentlichungstag der Patentschrift:
25.05.83

(21) Anmeldenummer: 79105225.1

(22) Anmeldetag: 17.12.79

(51) Int. Cl.³: **H 04 L 9/02**

(54) Verfahren zur Chiffrierung von Datenblöcken einer vorgegebenen Länge.

(30) Priorität: 29.12.78 US 974596

(43) Veröffentlichungstag der Anmeldung:
09.07.80 Patentblatt 80/14

(45) Bekanntmachung des Hinweises auf die Patenterteilung:
25.05.83 Patentblatt 83/21

(84) Benannte Vertragsstaaten:
DE FR GB

(56) Entgegenhaltungen:
US-A-4 078 152
1977 ELECTRO CONFERENCE RECORD, 1977, El Segundo, US, S. JEFFERY et al.: »Data encryption«, Seiten 30/4—1 bis 30/4—6
1978 NATIONAL TELECOMMUNICATIONS CONFERENCE RECORD, Band 2, 3—6, Dezember 1978, Birmingham, US, FENICHEL: »Data communications encryption — A description of applications and report on standards progress«, Seiten 26.2.1 bis 26.2.5

(73) Patentinhaber: International Business Machines Corporation, Armonk, N.Y. 10504 (US)

(72) Erfinder: Matyas, Stephen Michael, RD 5, Box 19F, Kingston New York 12401 (US)
Erfinder: Meyer, Carl Heinz Wilhelm, Route 28, RD 2 Box 223-11, Kingston, New York 12401 (US)
Erfinder: Tuckerman III, Louis Bryant, 121 Schrade Road, Briarcliff Manor New York 10510 (US)

(74) Vertreter: Möhlen, Wolfgang, Dipl.-Ing., c/o International Business Machines Corporation Zürich Patent Operations Säumerstrasse 4, CH-8803 Rüschlikon/ZH (CH)

# 0 012 974

## Verfahren zur Chiffrierung von Datenblöcken einer vorgegebenen Länge

Die vorliegende Erfindung gehört in das Gebiet der Kryptographie und vor allem in den Bereich der durch Schlüssel gesteuerten Blockchiffrierverfahren. Solche Verfahren werden in der Regel als sehr sicher beurteilt. Ist der Schlüssel nur dem Absender sowie dem berechtigten Empfänger der Nachricht bekannt, dann ist es mit Einsatz bekannter Technik für einen Gegenspieler eigentlich nicht möglich, solche anspruchsvollen Verfahren zu durchbrechen, d. h. der Chiffrierschlüssel kann nicht eruiert und daher die Nachricht nicht dechiffriert werden.

Im Hinblick auf den Erlaß neuer Datenschutzgesetze hat das amerikanische Normenbüro (NBS) eine Norm für den Schutz der EDV angenommen, deren technische Beschreibung im Januar 1977 unter dem Titel »Data Encryption Standard«, FIPS No. 46 des NBS, U.S. Department of Commerce, veröffentlicht worden ist. In der amerikanischen Patentschrift No. 3 958 081 ist eine Einrichtung beschrieben, welche dieser Norm entspricht.

Ein Problem bei Blockchiffrierverfahren ist darin zu sehen, daß bei Eingabe gleicher X-Blöcke in die Chiffrieranordnung an deren Ausgang gleiche Y-Blöcke erscheinen, wenn der gleiche Schlüssel benutzt worden ist. Die Meinungen, ob dies eine Schwäche des kryptographischen Algorithmus darstellt, gehen auseinander. Es erscheint jedoch wünschenswert, solche Schwächen zu vermeiden, indem verschiedene Verkettungsverfahren eingesetzt werden. Eines davon hat zur Folge, daß ein vorausgegangener Klar- oder Chiffretext mit den neuen, zu chiffrierenden Daten eingegeben wird, um eine Änderung des Produktes des Chiffriervorgangs zu erzielen. Ein solches Verfahren ist in der US-Patentschrift No. 4 078 152 beschrieben, auf die später noch eingegangen wird.

Im Verfahren des letztgenannten Patentes sind die Chiffretext-Blöcke bezüglich Sicherheit unbedingt vom vorausgegangenen Text abhängig, zuweilen von viel Text. Tatsächlich ist aber die Abhängigkeit von Chiffretext gering, um die Dechiffrierung nicht zu erschweren und die Fehlerausbreitung zu begrenzen. Das Resultat ist alles andere als ideal im Fall eines Datenblockes, der einem oder mehreren kurzen, aneinandergereihten Blöcken in einer zu chiffrierenden Nachricht folgt. Mit der vorliegenden Erfindung ist daher beabsichtigt, ein deutlich verbessertes Verfahren gegenüber jenem von US-Patent No. 4 078 152 zur Verarbeitung kurzer Datenblöcke aufzuzeigen, wobei Sicherheit und Fehlerkorrektur für diesen Fall ähnlich der bei einanderfolgenden vollen Datenblöcken erzielbar ist.

Beim Einsatz eines Blockchiffrierverfahrens werden in der Regel Klartextblöcke einer festgelegten Länge $L^{(f)}$, von z. B. 8 Bytes als volle Blöcke bezeichnet, angenommen und entsprechende Chiffretextblöcke derselben Länge gebildet. Treten im Klartext kurze Blöcke verschiedener Längen $L^{(s)} < L^{(f)}$ auf, dann ist ein geändertes Chiffrierverfahren nötig, besonders wenn der Chiffretext gleich lang sein soll wie der Klartext, d. h. wenn die kurzen Blöcke nicht zu voller Größe aufgebläht werden sollen. Offensichtlich soll die Sicherheit des Verfahrens und die Möglichkeit zur Fehlerkorrektur gleich jener des ursprünglichen Verfahrens sein. Bei der Verkettung nach dem US-Patent No. 4 078 152 wird jeder Block mit Hilfe des zuletzt vorausgegangenen Ausgangsblockes W der Chiffriereinrichtung chiffriert, wobei es darauf ankommt, ob der derzeitig zu verarbeitende Block volle Länge hat oder kürzer ist. Dieser Ausgangsblock W kann entweder der gerade vorausgegangene volle Chiffretextblock sein, oder das Chiffrierprodukt des gerade vorausgegangenen Ausgabeblockes, der zur Chiffrierung eines vorauslaufenden kurzen Blockes gedient hat. Seine Dechiffrierung ergäbe dann die zugehörige Invertierung.

Dieses Verfahren hat den Vorteil, daß der resultierende Chiffretextblock üblicherweise implizit von einigem oder viel vorausgegangenem Text abhängt, dessen Menge vom letzten Neubeginn des Verkettungsprozesses bestimmt ist, wie auch vom Schlüssel, was dem Verfahren Sicherheit gibt. Klar erkennbar ist vor allem die Abhängigkeit vom Schlüssel und von einer kleinen Chiffretextmenge, nämlich vom nächsten vorausgegangenen vollen Chiffretextblock, soweit vorhanden, oder von einem Erstverkettungswort. Diese klaren Abhängigkeiten ermöglichen einem berechtigten Empfänger, der den Schlüssel kennt, leichtes Dechiffrieren. Die Forderung nach fest verfügbarem Speicherraum ist gering, und meistens ist der Chiffretext leicht korrigierbar oder die Fehlerausbreitung begrenzt. Ein einzelner Fehler beim Chiffrieren oder Übermitteln des Chiffretextes setzt sich meistens nur über eine feste Distanz fort, die etwa der Länge von zwei vollen Blöcken $L^{(f)}$ entspricht.

Dieses Verfahren hat jedoch folgenden Nachteil. Wenn zu Beginn eine Reihe kurzer Blöcke vorhanden ist, z. B. eine Reihe kurzer Aufzeichnungen ohne einen vollen Block, was nicht üblich aber möglich ist, dann ist das Material, das zusammen mit dem Klartext zur Chiffrierung benutzt wird, nur vom Chiffrierschlüssel und vom benutzten Algorithmus abhängig. Es ist unabhängig von einem vorausgegangenen Text und zwei oder mehrere solcher Chiffretextfolgen, die mit demselben Schlüssel produziert worden sind, könnten mittels bekannter Methoden analysiert und entziffert werden. Im allgemeinen ist ein ähnliches Eindringen im unwahrscheinlichen Fall möglich, wenn derselbe Schlüssel zur Chiffrierung von zwei oder mehr Klartexten benutzt wird, die miteinander in der Folge und Länge ihrer Blöcke identisch sind und deren Texte in den vollen Blöcken übereinstimmen, auch wenn dies für die Texte der kurzen Blöcke nicht unbedingt zutrifft. Wenn immer eine Folge kurzer Blöcke vorkommt, mit oder ohne vorausgegangenen vollen Blöcken dann ist die Dechiffrierung des

2

nachfolgenden vollen oder kurzen Blockes eindeutig teilweise vom letzten vollen Block Chiffretext abhängig, der beliebig weit zurückliegen mag, so daß Fehler sich unbegrenzt verbreiten können.

Die vorliegende Erfindung soll gegenüber dem zitierten US-Patent No. 4 078 152 ein besseres Verfahren für Chiffrierung/Dechiffrierung von Datenblöcken aufzeigen, die auf kurze Blöcke folgen. In diesen Verfahren von der Art der durch Schlüssel gesteuerten Block-Chiffriermethoden wird das neue Verkettungswort, das nach Auftreten eines kurzen Blocks im Rahmen des Chiffrealgorithmus zum Chiffrieren des nachfolgenden Blockes verwendet wird, in neuartiger Weise abgeleitet. In den übrigen Belangen wickelt sich das vorliegende Verfahren ab wie jenes im zitierten Patent. Anhand der später folgenden Beschreibung wird ersichtlich, daß die hier dargelegte Einrichtung tatsächlich gegen einen Teil der im US-Patent No. 4 078 152 beschriebenen Einrichtung ausgetauscht werden kann.

Weitere Blockchiffrierverfahren sind auch noch in den US-Patenten 3 798 359, 3 796 830 und 3 958 081 beschrieben, die sich auch mit der Datensicherheit auseinandersetzen und hochentwickelte Einrichtungen aufzeigen. Das letzte Patent ist bereits im Zusammenhang mit den Normen für Datenschutz erwähnt worden. Die Erfüllung dieser Normen wird auch im vorliegenden Fall vorausgesetzt. So beträgt die Länge jedes Textblockes, der verarbeitet wird, 64 Bits, z. B. 8 Bytes zu je 8 Bits. Das Verfahren ist jedoch auch anwendbar, wenn andere Datenblocklängen festgelegt würden.

Die vorliegende Erfindung betrifft ein Verfahren zur Chiffrierung von Datenblöcken, wie es im Patentanspruch 1 definiert ist.

Das erfinderische Verfahren ergibt beim Auftreten kürzerer Datenblöcke dank der neuartigen Verkettung höhere Datensicherheit, die jener bei der Verarbeitung der Blöcke mit voller Länge gleichkommt. Gleichzeitig wird aber auch die Fehlerausbreitung begrenzt, wobei ein auftretender Fehler nach einer Datenlänge von zwei vollen Blöcken seinen Einfluß verliert. Die Erfindung wird nun anschließend anhand der zugehörigen Zeichnungen genau beschrieben. Es zeigt

Fig. 1A – 1E Blockdiagramme in vereinfachter Form zur Erläuterung des erfinderischen Verfahrens,

Fig. 2 die Anordnung der Fig. 2A und 2B,

Fig. 2A + 2B ein Flußdiagramm, das den Ablauf des erfinderischen Verfahrens darstellt,

Fig. 3 die Zusammensetzung der Fig. 3A, B, C und

Fig. 3A, B u. C eine Logikschaltung, dargestellt in Funktionsblöcken einer bevorzugten Ausführung zur Anwendung des erfinderischen Verfahrens.

Das vorliegende Verfahren kann als eine Änderung des durch Schlüssel gesteuerten Blockchiffrierverfahrens betrachtet werden, das im US-Patent No. 4 078 152 beschrieben ist. Die Änderung betrifft die Chiffrierung oder Dechiffrierung eines kurzen Datenblockes $X_i$ und definiert eine neue, wesentlich abweichende Art, ein neues Verkettungswort $V_i'$ zu bilden, das anschließend als »laufendes« Verkettungswort $V_{i+1}$ beim Chiffrieren des nächstfolgenden vollen oder kurzen Datenblocks $X_{i+1}$ benutzt wird.

Im vorgenannten Patent war das neue Verkettungswort $V_i'$, das als Folge der Chiffrierung des kurzen Klartextblockes $X_i$ der Länge $L_i^{(s)}$ gebildet wurde, als der letzte ausgegebene volle Block $W_i$ des Blockchiffrierverfahrens definiert. Sein Anfangsteil der Länge $L_i^{(s)}$ wurde durch eine umkehrbare Operation (z. B. über ein EXKLUSIV-ODER) mit dem Block $X_i$ zur Bildung des Chiffreblocks $Y_i$ kombiniert. Im vorliegenden Verfahren wird jedoch unter sonst gleichen Umständen das neue Verkettungswort $V_i'$ als die letzte volle Blocklänge der Verkettung $V_i//Y_i$ des alten Verkettungswortes $V_i$ mit dem neuen Chiffreblock $Y_i$ definiert, wobei letzterer im genannten Patent genau erläutert ist.

Steht im Klartext ein voller Block $X_i$ zur Verfügung, dann war gemäß dem zitierten Patent das neue Verkettungswort $V_i'$ gleich dem vollen Block $Y_i$ des neuen Chiffretext. Diese Definition des Ausdrucks $V_i'$ beim Auftreten eines vollen Datenblocks $X_i$ wird für das vorliegende Verfahren nicht geändert. Aber sie wird erfindungsgemäß nunmehr ersetzt durch eine Definition die besagt: $V_i'$ ist gleich der letzten vollen Blocklänge der Verkettung $V_i//Y_i$. Gemäß der vorliegenden Erfindung ist also das während der Chiffrierung des Blockes $X_i$ (voll oder kurz) erzeugte neue Verkettungswort $V_i'$ jederzeit gleich der letzten vollen Blocklänge der Verkettung $V_i/Y_i$ (des alten Verkettungswortes mit dem soeben erzeugten Chiffretext $Y_i$). Dies gilt unabhängig davon, ob $X_i$ und auch $Y_i$ ein voller oder ein kurzer Textblock ist.

Aus der eben aufgezeigten Definition ist ersichtlich, daß $V_i$ ebenso gut als die letzte volle Blocklänge der Verkettung $V_1//Y_1//Y_2//\ldots//Y_{i-1}//Y_i = V_1//Y^{(i)}$ des Erstverkettungswortes $V_1$ (beim Beginn der Verkettung) mit dem Chiffretext $Y^{(i)} = Y_1//Y_2//\ldots//Y_{i-1}//Y_i$, soweit er bisher erzeugt worden ist, definiert werden kann. Tatsächlich ist dies üblicherweise richtig außer in den Fällen, in welchen die Länge $L^{(i)}$ von $Y^{(i)}$ kleiner ist als die Länge $L^{(f)}$ eines vollen Blocks. Dann ist $V_i'$ gleich der Verkettung des letzten $(L^{(f)} - L^{(i)})$ – langen Teils von $V_1$ mit $Y^{(i)}$. Die klar ersichtliche Folge davon ist: die Dechiffrierung eines vorliegenden Blocks Chiffretext ist zuerst gerade von diesem Block abhängig, dann von der unmittelbar vorausgegangenen vollen Blocklänge an Chiffretext und schließlich vom Schlüssel. Der Einfluß eines Fehlers im Chiffretext erstreckt sich daher höchstens auf zwei volle Blocklängen dechiffrierten Klartext.

Um die eben erwähnte Verkettung auszuführen, wenn noch keine volle Blocklänge an Chiffretext erzeugt worden ist, wird im Verfahren stillschweigend angenommen, daß dem vorliegenden Chiffretext eine volle Blocklänge Daten $V_1 = KI$, die feststehen oder variabel sind, vorausgehen. Diese werden als Erstverkettungswort bezeichnet, das sowohl dem Chiffreur als auch dem legitimen

3

**0 012 974**

Dechiffreur bekannt ist. Das Erstverkettungswort wird im vorliegenden Fall gleich wie im US-Patent No. 4 078 152 benutzt.

Um die Fehlerausbreitung bei der Chiffrierung eines vollen Blocks zu begrenzen und um gleichzeitig das Vorgehen für volle und kurze Datenblöcke zu vereinheitlichen, verwendet das hier beschriebene Verfahren als volle Datenblocklänge, die vor der Eingabe in ein Blockchiffriergerät z. B. über eine EXKLUSIV-ODER-Verknüpfung mit einem vollen Block Klartext zu kombinieren ist, den eben vorausgegangenen Chiffretext in voller Blocklänge. Dies gilt auch im zitierten US-Patent, wenn der unmittelbar vorausgegangene Klartextblock ein voller Block ist, jedoch dann nicht, wenn der vorausgegangene Klartextblock ein kurzer Block ist.

Die Verkettungsmethode für kurze und lange Datenblöcke gemäß der vorliegenden Erfindung verwendet ein laufendes Verkettungswort, das stets als der unmittelbar vorausgegangene Chiffretext in voller Blocklänge $L^{(f)}$ definiert ist. Diese Methode erfordert, daß dem ersten Text in voller Blocklänge ein Erstverkettungswort KI vorausgeht, das wie schon erwähnt ein Datenblock sein muß, auf den sich die Benützer des Verfahrens vorher geeinigt haben. Die Bereitstellung eines Erstverkettungswortes erscheint selbstverständlich, sie ist aber im US-Patent 4 078 152 im Detail erläutert. Ist der laufende Klartextblock ein voller Block, dann wird er mittels einer umkehrbaren Funktion , wie z. B. einem EXKLUSIV-ODER, mit dem laufenden Verkettungswort kombiniert. Das Resultat wird anschließend durch ein Blockchiffriergerät, das in der Anlage enthalten ist und von einem Schlüssel gesteuert wird, nach Blöcken chiffriert. Das Ergebnis des ganzen Vorgangs ist die Erzeugung eines vollen Blocks neuen Chiffretextes. Ist der laufende Block Klartext jedoch kurz, d. h. $L^{(s)} < L^{(f)}$, dann wird das laufende Verkettungswort im Gerät blockchiffriert. Das Resultat dieser Chiffrierung wird über eine EXKLUSIV-ODER-Verknüpfung soweit als notwendig ($L^{(s)}$) mit dem Klartext kombiniert, um einen gleich langen ($L^{(s)}$) neuen Chiffretext zu erlangen.

Die Bedeutung des Ausdrucks »Verkettungswort« ist im genannten US-Patent No. 4 078 152 und im vorliegenden Verfahren gleich. Die Ableitung des Verkettungswortes ist jedoch in der vorliegenden Erfindung wesentlich geändert worden. Wenn im genannten Patent das Verkettungswort nicht erneuert worden ist und es sich daher um Satzverkettung handelt, dann ist das benutzte laufende Verkettungswort nach n kurzen Blöcken, unabhängig davon wieviele es in Reihe sind, stets das Resultat der n-fach ausgeführten Blockchiffrierung an dem letzten vorausgegangenen vollen Block Y Chiffretext seit dem letzten Neubeginn des Chiffriervorgangs. Statt dessen kann es das Resultat der n-fachen Blockchiffrierung des Erstverkettungswortes KI sein, wenn kein voller Block da ist. Bei dieser n-fachen Blockchiffrierung wird nach dem ersten Durchgang jeweils das erhaltene Resultat wieder eingegeben, bis n Durchgänge ausgeführt sind. Im vorliegenden Verfahren jedoch besteht das laufende Verkettungswort aus der letzten vollen Blocklänge Chiffretext, wobei man sich vorzustellen hat, daß davor noch das Erstverkettungswort steht. Ob der Chiffretext aus einem Chiffriervorgang mit einem vollen oder einem kurzen Block hervorgegangen ist, spielt dabei keine Rolle. Wäre nie mehr als ein kurzer Block am Ende eines Satzes und gäbe es keine Satzverkettung, dann wäre der Strom von Chiffretext erzeugt nach dem vorliegenden Verfahren und jener nach dem erwähnten US-Patent derselbe. Wenn es aber zwei oder mehr kurze, aufeinanderfolgende Blöcke mit Satzverkettung gibt, oder wenn ein kurzer Block in der Mitte eines ganzen Satzes vorkommt, dann weichen die nach beiden Verfahren erzeugten Chiffretexte merklich voneinander ab.

Wenn formell der Blockchiffriervorgang als f(K, . . .), also z. B. Ausgabe = f (K, Eingabe) dargestellt ist, wobei K den Schlüssel bedeutet, und wenn V das laufende Verkettungswort, X der laufende Klartextblock, Y der resultierende Chiffretextblock und V' das neue Verkettungswort ist, sowie V mit einem abgesprochenen Erstverkettungswort beginnt, dann läßt sich das neue Verfahren zur Definition von aufeinanderfolgenden Y und V' folgendermaßen darstellen:

$$X = \text{kurzer Block} \quad Y = X \oplus \text{LEFTLX} [f(K, V)]$$
$$V' = \text{RIGHTFB} (V//Y)$$

$$X = \text{voller Block} \quad Y = f(K, X \oplus V)$$
$$V' = Y [= \text{RIGHTFB} (V//Y), \text{und hier verschwindet V}]$$

Darin bedeutet $\oplus$ einen umkehrbaren Vorgang wie eine EXKLUSIV-ODER-Verknüpfung LEFTLX (. . .) den äußersten linken Teil der Reihe . . . mit Länge X, V//Y die Verkettung der Reihen V mit Y und RIGHTFB ( . . . ) den am weitesten rechts liegenden Teil einer Reihe . . . mit voller Blocklänge.

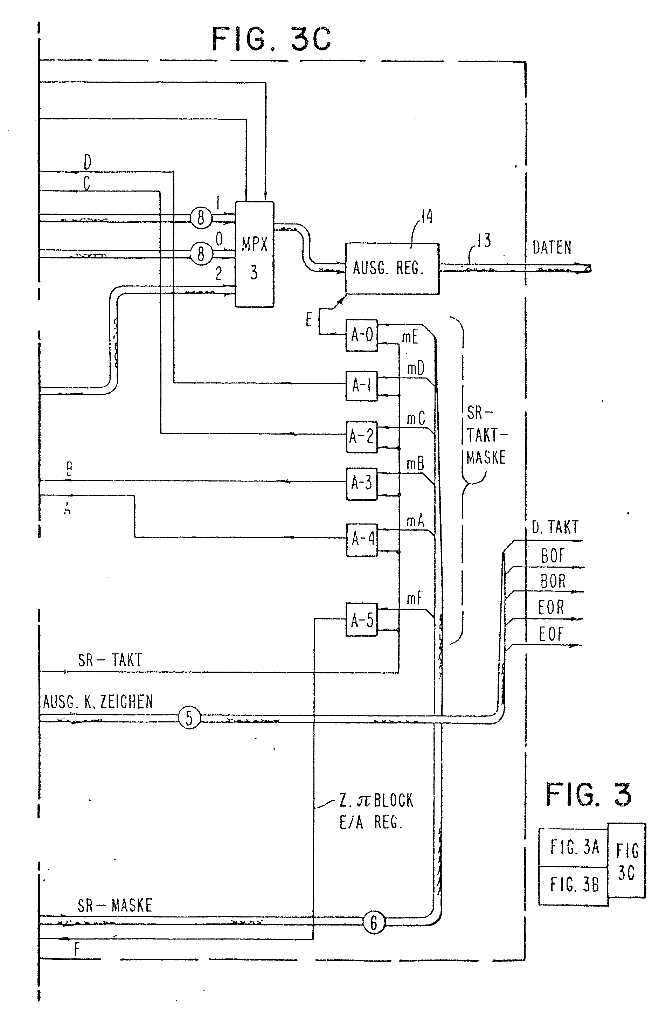

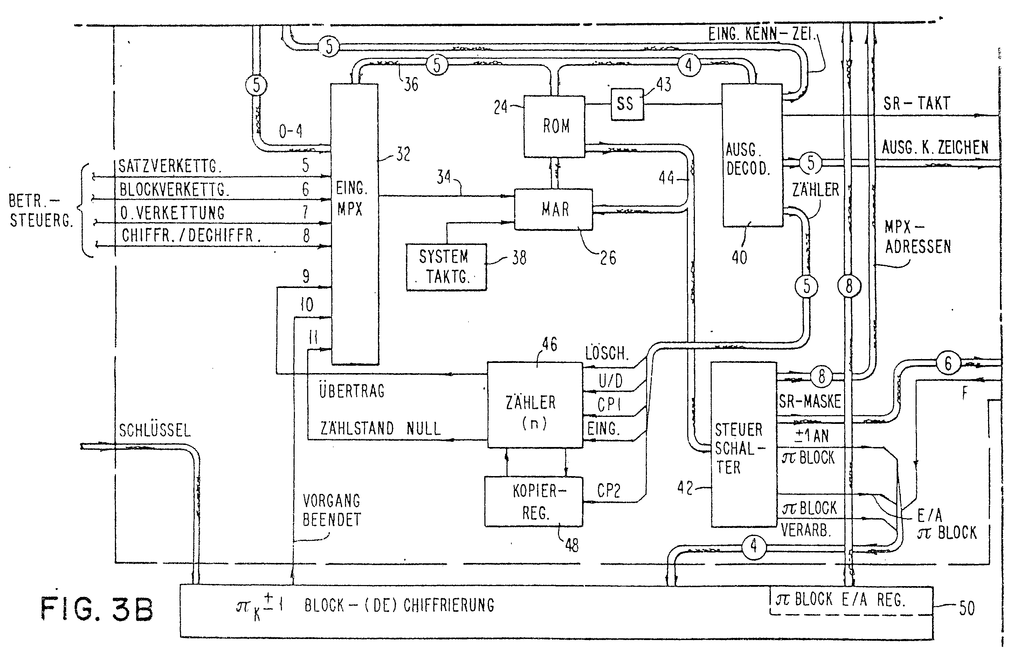

Das so beschriebene Verkettungsverfahren wird durch die Darstellung der Fig. 1A bis 1D etwas deutlicher. Es handelt sich dabei um funktionelle Blöcke höherer Stufe und Datenflußdiagramme, welche den prinzipiellen Ablauf des erfinderischen Verfahrens erklären. Die Fig. 1A und 1B zeigen den Datenfluß im Normalfall mit einem vollen Datenblock, d. h. einem Block der Länge $L^{(f)} = 8$ Bytes. In allen Figuren bedeutet das Zeichen $\pi \pm^1$ ein Schlüssel-gesteuertes Blockchiffrierverfahren, wie beispielsweise jenes bereits erwähnte Normverfahren FIPS für Datenchiffrierung des amerikanischen Normenbüros (NBS). Der obere Index +1 bedeutet Chiffrierung, −1 Dechiffrierung. Diese Ausdrücke sind auch im besagten US-Patent verwendet worden. Es genügt nach dem patentierten und nach dem vorliegenden Verfahren, wenn dem $\pi$-Block Eingabe/Ausgabe-Register 50 von Fig. 3B ein Datenblock

4

zum Chiffrieren oder Dechiffrieren, sowie ein besonderer Schlüssel und geeignete Steuersignale eingegeben werden. Das Ergebnis erscheint dann im selben Register 50. Die Fig. 1A und 1B sind Flußdiagramme, welche das Chiffrieren und Dechiffrieren eines vollen Datenblocks zeigen, gleich wie dies schon im US-Patent No. 4 078 152 beschrieben ist. In Fig. 1A durchläuft ein zu chiffrierender voller Block X Klartext das EXKLUSIV-ODER (EX-O) zusammen mit dem laufenden Verkettungswort V. Die Ausgangssignale des EX-O werden einem $\pi^{+1}$-Kasten zugeführt, und daraus ergibt sich der Chiffreblock Y, der gleichzeitig das neue Verkettungswort V′ dieses Vorgangs darstellt. Letzteres wird zum laufenden Verkettungswort V für den nächsten Datenblock.

In Fig. 1B wird dieser Vorgang funktionell für die Dechiffrierung umgekehrt. Dabei durchläuft ein voller Block Y Chiffretext den $\pi^{-1}$-Kasten zwecks Dechiffrierung und ist gleichzeitig neues Verkettungswort V′ für den nächstfolgenden zu dechiffrierenden Datenblock. Der Ausgang des $\pi^{-1}$-Kastens wird zum einen Eingang der EX-O-Verknüpfung, deren anderer Eingang das laufende Verkettungswort V entgegennimmt. Im Ausgang des EX-O-Kastens erscheint der volle dechiffrierte Klartextblock X.

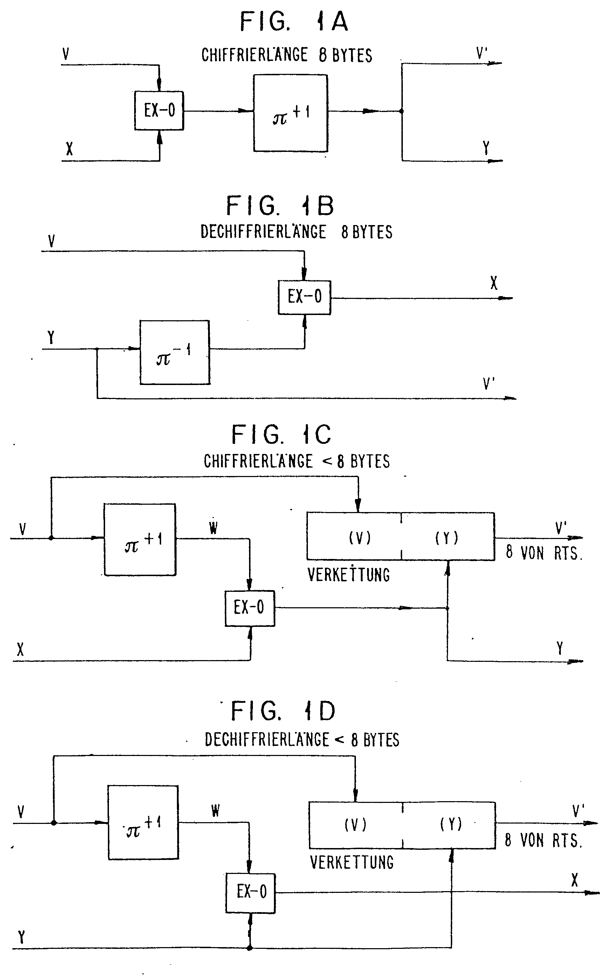

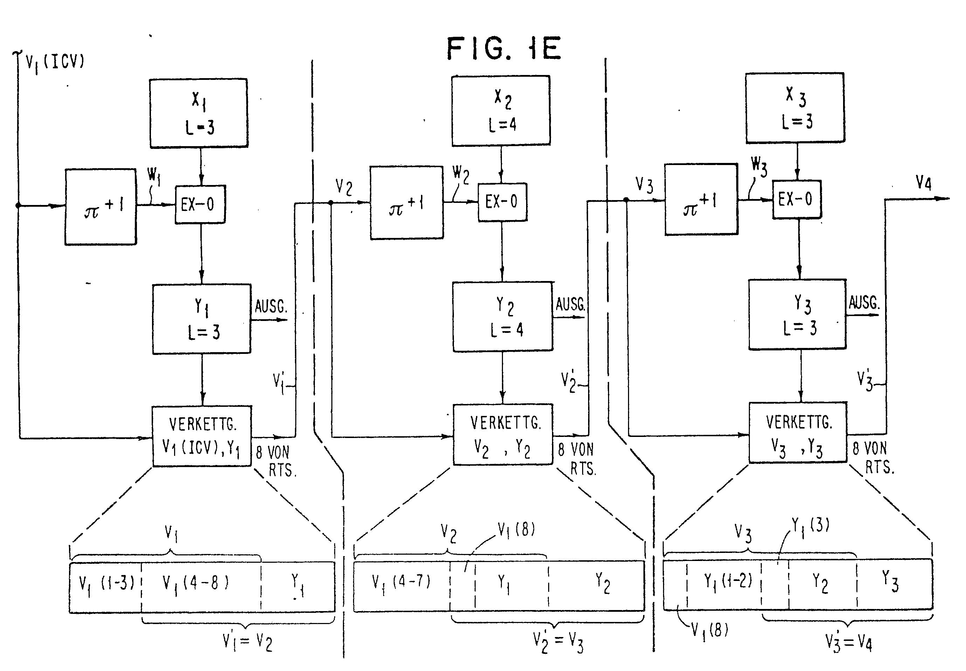

In Fig. 1C wird nach der vorliegenden Erfindung die Verkettung eines kurzen Blocks zwecks Chiffrierung und in Fig. 1D der Vorgang zwecks Dechiffrierung gezeigt. Offensichtlich ist das Dechiffrieren die mathematische Inversion des Chiffrierens. Es ist zu beachten, daß in allen Figuren 1C, 1D und 1E die Länge jedes Blockes X gleich der Länge des entsprechenden Y ist und daß dies immer kürzer als ein voller Block von 8 Bytes ist. Damit keine Unklarheiten entstehen, wird in dieser Beschreibung der obere Index (s) nicht mehr verwendet werden. Das laufende Verkettungswort V wird in Fig. 1C zuerst dem $\pi^{+1}$-Kasten zur Chiffrierung zugeführt und gleichzeitig in ein Verkettungsregister eingegeben. Der Klartextblock X wird über EX-O mit der Ausgabe W des $\pi$-Kastens verknüpft, um den Chiffreblock Y zu bilden.

Der kurze Block chiffrierter Daten Y wird aber auch in das Verkettungsregister geschoben, und diesem Register werden die weitest-rechts stehenden Bytes einer vollen Blocklänge entnommen und zum neuen Verkettungswort V′ gemacht. Für diesen Vorgang genügt es, wenn das Verkettungsregister nur gerade soviele Bytes entsprechend einer vollen Blocklänge aufnehmen kann. Wenn der neue Chiffreblock Y hineingeschoben wird, dann werden eine gleiche Zahl der außen-links stehenden, d. h. ältesten Bytes hinausgeschoben und gehen verloren. Der verbleibende Inhalt des Verkettungsregisters wird somit das neue Verkettungswort V′ sein. Es muß festgehalten werden, daß das neue Verkettungswort V′ stets alle Bytes des erzeugten Blockes Y umfaßt und soviele der am weitest-rechts stehenden Bytes des laufenden Verkettungswortes V, als es zum Auffüllen einer vollen Blocklänge braucht. Dieses neue Verkettungswort wird für die anschließende Operation benötigt, unbekümmert darum, ob der nächste vorkommende Block ein voller oder wieder ein kurzer Block ist. Die Lage beim Auftreten einander folgender kurzer Blöcke ist in der Fig. 1E dargestellt und wird später erläutert. Der Dechiffriervorgang von Fig. 1D ist die mathematische Inversion der Chiffrierung in Fig. 1C, wobei in beiden Fällen der $\pi$-Kasten im Chiffriermodus arbeitet.

Der Hauptunterschied in den Fig. 1C und 1D ist die Vertauschung der Rolle des kurzen Blockes X mit der des entsprechenden kurzen Blockes Y bezüglich Eingabe und Ausgabe, da die Wirkung eines EXKLUSIV-ODERs ihre eigene Inversion (Antivalenz) darstellt. Die Wirkung der Verknüpfung in Fig. 1C ist $Y = X$ (EX-O) $W$, wobei W der Ausgabe des $\pi$-Kastens, oder genauer, einem Anfangsteil gleicher Länge wie X entspricht. Die Wirkung der Verknüpfung in Fig. 1D ist $X = Y$ (EX-O) $W = Y$ (EX-O)$^{-1}W$. Letzteres ist das Inverse von Fig. 1C und erzeugt den kurzen, dechiffrierten Block X. Wird statt EX-O eine andere Funktion für die Chiffrierung eines kurzen Blockes X verwendet, beispielsweise $Y = X$ $\triangle$ W, wobei es eine Inversion der logischen Verknüpfung $\triangle$ nämlich $\underline{\triangle}$ gibt, dann muß der Vorgang $X = Y$ $\underline{\triangle}$ W für die Dechiffrierung von Y benutzt werden. Es ist zu bemerken, daß für Chiffrierung und Dechiffrierung eines kurzen Blockes beidemal ein Chiffriervorgang im Blockchiffriergerät ausgeführt wird, wie dies auch im erwähnten US-Patent geschieht. Dies ist notwendig, um sicherzustellen, daß sowohl für Chiffrierung als auch für Dechiffrierung dieselbe Größe W zur Verfügung steht. Bei der Dechiffrierung erhält das Verkettungsregister das laufende Verkettungswort V und den derzeit vorliegenden Chiffreblock Y, die gemäß der Beschreibung von Fig. 1C verkettet werden und das neue Verkettungswort V′ ergeben.

Sind X und Y die einander entsprechenden Klar- und Chiffretexte von kurzer Blocklänge, dann wird ausgehend von V beim Chiffrieren von X das identische neue Verkettungswort V′ gebildet. Dies ist für die erfolgreiche Dechiffrierung nachfolgender Blöcke notwendig.

In der Fig. 1E ist nun ein Beispiel zur Chiffrierung von drei sich folgenden kurzen Blöcken $X_1$, $X_2$ und $X_3$ aus einem Datenfluß gezeigt. Es wird angenommen, daß im Verkettungsregister in passender Weise ein laufendes Verkettungswort $V_1$ gespeichert ist. Letzteres kann auch ein Erstverkettungswort (ICV) sein, falls diese kurzen Blöcke die ersten Daten einer neuen Übermittlung, einer Datei, oder eines Datensatzes ohne Satzverkettung sind, die von der Einrichtung zu chiffrieren sind. Die drei Vorgänge werden durch zwei senkrechte, gestrichelte Linien getrennt, und jeder Teil umfaßt dieselben logischen Schaltblöcke des Diagramms nach Fig. 1C. Die drei kurzen Blöcke $X_1$, $X_2$ und $X_3$ sind mit einer Länge von 3, 4 und 3 Bytes angenommen.

In allen drei Stufen wird dem $\pi$-Kasten das entsprechende laufende Verkettungswort $V_1$, $V_2$ bzw. $V_3$ zugeführt. Die Ausgaben $W_1$, $W_2$ und $W_3$ der betreffenden $\pi$-Kasten werden in einem EX-O mit dem

zugehörigen Klartextblock $X_1$, $X_2$ bzw. $X_3$ verknüpft und so die drei Chiffreblöcke $Y_1$, $Y_2$ bzw. $Y_3$ erzeugt. Es ist leicht festzustellen, daß nur soviele Bytes der Ausgabe des betreffenden $\pi$-Kastens benutzt werden, als zur Erzeugung eines gleich langen Chiffretexts wie der Eingangstext notwendig sind. In der ersten Stufe hat $Y_1$ eine Länge von 3 Bytes.

Es sei nun die Bildung der neuen Verkettungswörter in jeder Stufe beachtet. In Stufe 1 wird $Y_1$ mit dem laufenden Verkettungswort $V_1$ verkettet, wie aus der vergrößerten Darstellung des Verkettungsregisters samt Inhalt am unteren Rand der Abbildung hervorgeht. Dadurch wird ein neues Verkettungswort $V_1'$ mit 8 Bytes erzeugt, das rechts die 3 Bytes von $Y_1$ umfaßt und links davon 5 der in $V_1$ am weitesten rechts stehenden Bytes. Gemäß der Darstellung wird $V_1'$ jetzt zum laufenden Verkettungswort $V_2$ für die zweite Stufe. Wie früher schon bemerkt, braucht das Verkettungsregister nur der Länge eines vollen Blocks zu entsprechen. Die Teile des dargestellten Inhalts, die nicht in das neue Verkettungswort $V_1'$ eingeschlossen sind, können hinausgeschoben und fallen gelassen werden, wenn der Chiffretext $Y_1$ hineingeschoben wird.

Gleicherweise gelangt das laufende Verkettungswort $V_2$ in den $\pi$-Kasten und zusätzlich in das Verkettungsregister. Letzteres empfängt anschließend den neuen kurzen Chiffreblock $Y_2$, der 4 Bytes umfaßt. Dies ist am unteren Rand der zweiten Stufe gezeigt. Das neue Verkettungswort $V_2'$ besteht also aus 4 Bytes von $Y_2$ und den 4 am weitesten rechts stehenden Bytes von $V_2$. Diese letzteren umfassen 3 Bytes von $Y_1$ und ein Byte des Verkettungswortes $V_1$.

In der dritten Stufe gelangt das laufende Verkettungswort $V_3$ in den $\pi$-Kasten und in das Verkettungsregister. Im letzteren wird es mit dem kurzen Chiffreblock $Y_3$ kombiniert. Das neue Verkettungswort $V_3'$ besteht aus den 3 Bytes von $Y_3$ und den 5 am weitesten rechts stehenden Bytes von $V_3$. In diesem Zeitpunkt umfaßt nun das neue Verkettungswort $V_3'$, das zum laufenden Verkettungswort $V_4$ für die nächste Operation wird, nur noch Chiffretext. Dies sind die 3 Bytes von $Y_3$, die 4 Bytes von $Y_2$ und das letzte Byte rechts von $Y_1$. Es ist offensichtlich, das sich das Verkettungswort ständig ändert, unabhängig davon, wieviele kurze Blöcke in einer Reihe sich folgen. Hätte ein vierter Datenblock die volle Länge von 8 Bytes, dann würde $V_4$ als laufendes Verkettungswort eines Chiffriervorganges für volle Blöcke eingesetzt, wie dies Fig. 1A entspricht.

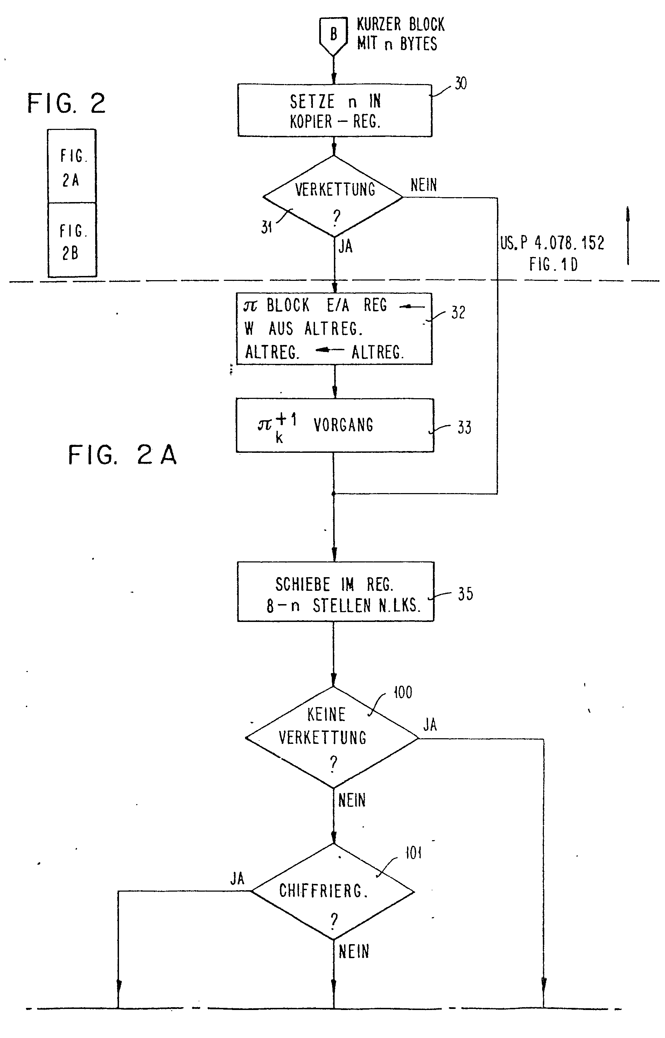

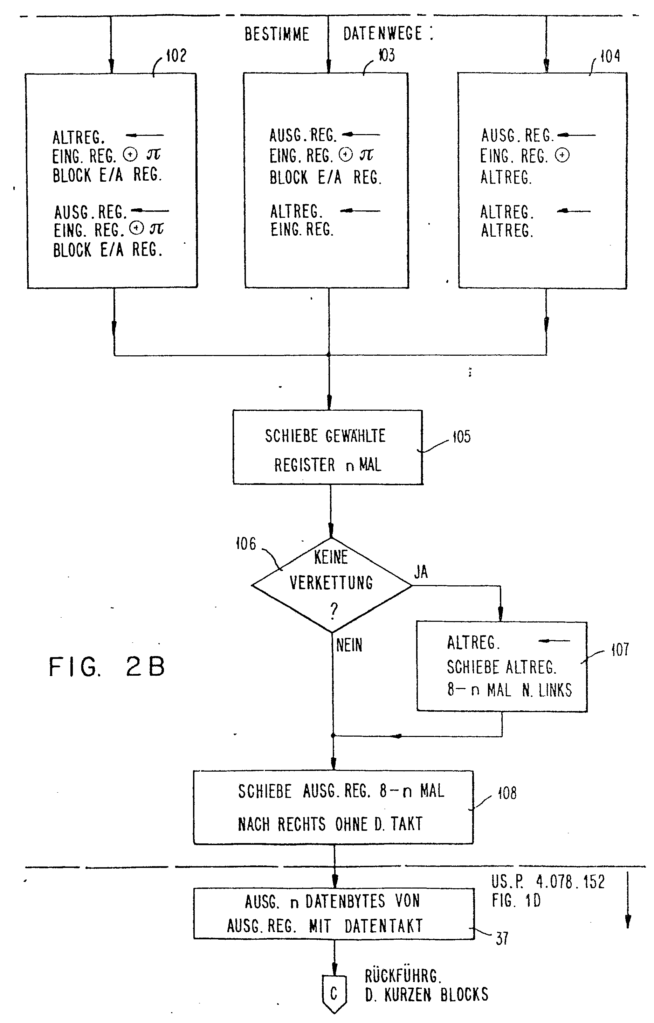

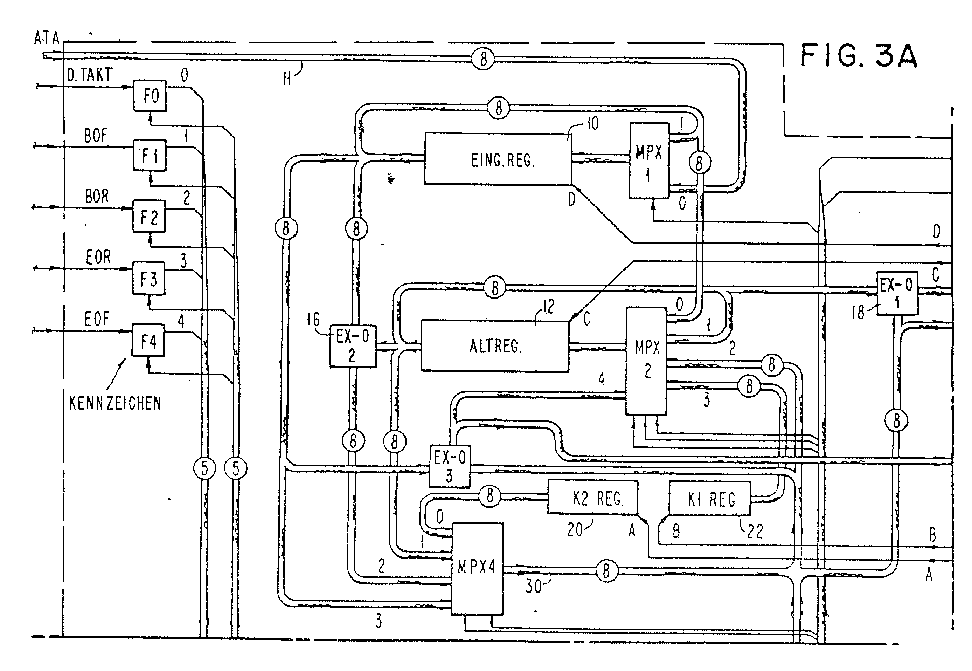

Nach dieser Beschreibung des Arbeitskonzepts des vorliegenden, verbesserten Verkettungsverfahrens für kurze Blöcke folgt nun die Beschreibung einer speziellen Schaltungsanordnung, welche der Ausübung des erfinderischen Verfahrens dient. Die Fig. 2A und 2B zeigen ein Flußdiagramm der erforderlichen Operationen in der Schaltungsanordnung der Fig. 3A—3C. Vor weiteren Erläuterungen soll jedoch der Zusammenhang der vorliegenden Erfindung mit jener, die im US-Patent No. 4 078 152 beschrieben ist, nochmals klar festgelegt werden. Die jetzt zu besprechende Erfindung, nämlich ein Chiffrier- und Verkettungsverfahren für kurze Datenblöcke, bildet eine ergänzende Verbesserung des Verfahrens im genannten Patent. Als Folge davon arbeitet das ganze Verfahren wie in diesem Patent beschrieben bis ein kurzer Datenblock auftritt. In diesem Punkt übernimmt die vorliegende, geänderte Schaltungsanordnung die Steuerung der Vorgänge in der Anlage. Die Fig. 1D des genannten Patentes kann durch die Figuren 2A und 2B der vorliegenden Erfindungsbeschreibung genau ersetzt werden.

Drei Register unter anderem sind von den Funktionsblöcken sowohl im genannten Patent als auch in der vorliegenden Schaltungsanordnung zu finden: das Eingangsregister 10 (IN REG.) für Eingabedaten, das Altregister 12 (OLD REG.) für das Verkettungswort und das Ausgangsregister 14 (OUT REG.) für Ausgabedaten. Die Einrichtung arbeitet in genau gleicher Weise bis und mit dem Kasten 35 des Flußdiagramms, außer daß der Kasten 34 weggefallen ist. Die Kasten 100—108 ersetzen den ehemaligen Kasten 36, und nach dem Verlassen des Kastens 108 gemäß der vorliegenden Anordnung wird wieder an den Kasten 37 angeschlossen, wobei die Vorgänge wieder dieselben wie früher sind. Zusätzliche Schaltungselemente in den Fig. 3A, 3B und 3C bezüglich der entsprechenden Figuren im genannten US-Patent sind die EXKLUSIV-ODER-Verknüpfung EX-O3 (Fig. 3A) zusammen mit der zugehörigen Verdrahtung für deren Anschluß, die zusätzlichen Eingabe- und Steuervorrichtungen für die beiden Multiplexer MPX2 und MPX3. Ein Dateneingang des EX-O3 kommt vom Eingangsregister und der andere vom $\pi$-Block-E/A-Register 50. Der Ausgang des EX-O3 wird einerseits dem MPX2 zugeführt und bildet dort den neuen Eingang No. 4, andererseits dem MPX3 als neuen Eingang No. 2. Eine zusätzliche Steuerleitung muß daher je MPX2 und MPX3 zugeführt werden.

Zur Durchführung des vorliegenden erfinderischen Verfahrens zwecks Verkettung kurzer Blöcke wird die EX-O-Funktion der kurzen Blöcke X und Y mit dem Blockchiffreprodukt W des laufenden Verkettungswortes V eher im Schaltblock EX-O3 ausgeübt als in EX-O2 gemäß dem US-Patent No. 4 078 152. Der Zweck bei der Chiffrierung ist, die Ausgabe von EX-O3, welche den kurzen Chiffreblock Y darstellt, ebenfalls über MPX2 an das Altregister 12 zu richten, um dort den Platz im neuen Verkettungswort V' einzunehmen. Das Altregister 12 dient sowohl als das früher beschriebene Verkettungsregister wie auch als Speicher des entsprechenden neuen Verkettungswortes, das anschließend zum laufenden Verkettungswort gemacht wird. Da nur die letzte volle Blocklänge des Verkettungsergebnisses als V' gespeichert wird, genügt es, wenn das Altregister eine volle Blocklänge umfaßt und die überflüssigen ältesten Bytes fallengelassen werden.

Im übrigen arbeitet die Anordnung der Fig. 3A—3C der vorliegenden Erfindung wie jene des genannten Patentes, was nicht nochmals beschrieben werden soll. Die neuen Folgen von Mikroprogrammen würden ebenfalls im Restwertspeicher 24 (ROM) untergebracht, um die erforderlichen Schiebe-, Schalt-, Prüf-, Verzweigungs- usw. Funktionen zu steuern, wie dies im genannten Patent geschieht. Daher arbeiten der Ausgangsdecodierer 40, die Steuerschalter 42, der Eingangs-Multiplexer 32 und der Festwertspeicher 24 (ROM) sowie die zugehörigen Speicher-Adreßregister 26 (MAR) genauso wie bisher.

Zu Beginn der Beschreibung der vorliegenden Anordnung wird vorausgesetzt, daß das Vorhandensein eines kurzen Datenblocks festgestellt worden ist. Derzeit steckt dieser kurze Block (Klar- oder Chiffretext) im Eingangsregister 10. Die Anzahl n der enthaltenen Bytes des kurzen Blocks wird sogleich im Zähler 46 gespeichert. Daher kann jetzt davon ausgegangen werden, daß die Operation sich zum Kasten 30 des Flußdiagramms Fig. 2A verlagert hat. Dadurch wird die Zahl n, auf welche der Zähler 46 eingestellt worden ist, im Kopierregister 48 gespeichert. Das Verfahren erreicht nun den Kasten 31, wo entschieden wird, ob Verkettung abzuwenden sei oder nicht. Gemäß den Absichten der vorliegenden Erfindung kann dies bejaht werden, und es geht weiter zu den Kästen 32 und 33. Zusammen bewirken sie, daß der Inhalt des Altregisters 12, der das laufende Verkettungswort V umfaßt, einerseits durch den $\pi$-Block kytographisch zu X verwandelt und so im $\pi$-Block E/A-Register 50 bereitgestellt wird, andererseits aber im Altregister noch zurückgehalten wird.

Der Vorgang der Transformierung von W (TW) gemäß Kasten 32 ist ein fakultativer Zusatz zur Verkettung und im genannten Patent beschrieben. Er kann also auch hier wie früher eingeschlossen oder weggelassen werden. Es geht jetzt weiter zum Kasten 35 des Flußdiagramms, nachdem der im US-Patent noch existierende Kasten 34 ausgeschieden ist. Nun werden die n Eingangsbytes um (8−n) Stellen nach links verschoben. Dadurch werden die Bytes im Eingangsregister 10 links-bündig eingestellt. Es soll hier noch daran erinnert werden, daß die Register der vorliegenden Schaltungsanordnung alle nach Bytes seriell organisiert sind.

Das Verfahren setzt sich mit der Entscheidung im Kasten 100 fort, die als erste den vormaligen Kasten 36 ersetzt. Dabei wird die Betriebssteuerleitung 7 abgefragt, ob Verkettung verlangt ist. Wenn, wie anzunehmen, Verkettung bejaht wird, dann geht es weiter zum Kasten 101, wo der Entscheid fällt, ob das Verfahren im Chiffriermodus oder im Dechiffriermodus arbeitet.

Geht es um Chiffrierung, dann folgt Kasten 102, bei welchem Schritt der künftige Datenweg festgelegt wird. Gemäß Verfahrensschritt im Kasten 105 werden n Schiebeoperationen ausgeführt. Durch diese wird der im Eingangsregister gespeicherte, kurze Klartextblock X mit dem Anfangsteil des blockchiffrierten Ausdrucks W, der vom laufenden Verkettungswort V stammt und im $\pi$-Block E/A-Register 50 bereitsteht, in eine EX-O-Verknüpfung eingegeben. Gleichzeitig wird das Resultat dieser Verknüpfung, das den kurzen Chiffreblock Y darstellt, sowohl in das Altregister 12, zwecks Aufnahme in das neue Verkettungswort V', wie auch in das Ausgangsregister 14 eingegeben. Der soeben beschriebene Datenfluß und die zugehörigen Operationen sind schon in Fig. 1C erläutert worden.

Wie im Kasten 106 angedeutet ist, wird erneut geprüft und entschieden, ob Verkettung verlangt worden ist. Da dies unter den vorliegenden Umständen bejaht werden muß, geht das Verfahren einen Schritt weiter zum Kasten 108, wobei der Inhalt des Ausgangsregisters 14 insgesamt (8−n)-mal verschoben wird, um darin den kurzen Block Y rechts-bündig einzustellen. Danach geht es zum Kasten 37, und die n Bytes von Y werden ausgegeben, so daß von hier an die Steuerung gemäß dem mehrfach zitierten US-Patent wiederaufgenommen wird.

Kehren wir noch einmal zum Verfahrensschritt 101 zurück und nehmen wir an, daß Dechiffrierung erforderlich ist. Die Steuerung geht nun an den Kasten 103 über, wobei wiederum der Datenweg festgelegt wird. Darauf folgt Kasten 105, und es werden n Schiebeoperationen ausgeführt, durch die der kurze Chiffreblock Y, der im Eingangsregister gespeichert ist, mit dem Anfangsteil des vom laufenden Verkettungswort V stammenden und im $\pi$-Block E/A Register bereitgestellten Blockchiffre-Ausdrucks W in einem EX-O verknüpft wird. Das Ergebnis der Verknüpfung wird anschließend in das Ausgangsregister gegeben und gleichzeitig der Inhalt des Eingangsregisters, welches Y enthält, in das Altregister übergeführt, um dort einen Teil des neuen Verkettungswortes V' zu bilden. Der eben beschriebene Datenfluß und die Verfahrensschritte sind bereits in Fig. 1D dargelegt worden. Der nachfolgende Steuerungsverlauf geht über dieselben Schritte in den Kästen 106, 108 und 37, die bereits im Zusammenhang mit der Chiffrierung samt Verkettung eines kurzen Blocks beschrieben worden sind.

Wenn wir nochmals mit dem Schritt im Kasten 100 beginnen, dann betrachten wir einen kurzen Block und nehmen an, daß keine Verkettung verlangt ist. So kann nach Wunsch die Verkettung gemäß dem zitierten US-Patent und der vorliegenden Erfindung umgangen werden. Es folgt darauf der im Kasten 104 umschriebene Schritt. Wieder wird der Datenweg festgelegt. Gemäß dem Kasten 105 werden n Schiebeoperationen ausgeführt, wodurch der Klartextblock X oder der Chiffreblock Y, die im Eingangsregister gespeichert sind, mit dem Anfangsteil des Inhalts im Altregister in einem EX-O verknüpft wird. In diesem Zeitpunkt enthält das Altregister den Blockchiffre-Ausdruck einer Größe K2, wobei dieser Ausdruck während der Schritte 5, 7, 8 und 9 gemäß Fig. 1A des zitierten Patentes zugeführt worden ist. Das Resultat der EX-O-Verknüpfung wird in das Ausgangsregister überführt, und der Inhalt des Altregisters wird wieder in dieses zurückversetzt. Sodann wird gemäß Kasten 106 geprüft, ob Verkettung im Spiel ist. Im vorliegenden Fall geht es nun weiter zum Kasten 107. Bei diesem Schritt wird der Inhalt im Altregister zusätzlich um (8−n) Bytes verschoben, so daß wieder der

7

Inhalt vor dem Schritt 104 erreicht wird, um die Vorbereitung zur Verarbeitung weiterer kurzer Blöcke zu treffen. Die Steuerung setzt sich mit den Schritten in den Kästen 108 und 37 fort, wobei der kurze Block X oder Y ausgelesen wird und der Datenfluß den Punkt C der Fig. 1A des genannten Patentes erreicht.

Nach der Beschreibung des Datenflusses anhand der Fig. 2A und 2B soll nun eine solche über die Arbeitsweise der Schaltungsanordnung folgen, wie sie zur Ausführung des Verfahrens erforderlich ist. In den Fig. 3A–3C sind dazu alle notwendigen Einzelheiten dargestellt, und der Arbeitsablauf kann mittels der Mikroprogramm-Folgen beschrieben werden, deren Liste unmittelbar anschließt. Links der Mikroprogramm-Liste geben die in Klammern gesetzten Zahlen an, um welchen Schritt des Verfahrens nach den Fig. 2A und 2B des Flußdiagramms es sich jeweils handelt. Es bleibt zu bemerken, daß jeder bezifferte Schritt in der Mikroprogramm-Liste durch eine oder mehrere Mikroinstruktionen auszuführen ist, die im Festwertspeicher 24 (ROM) enthalten sind. Das Arbeiten der Steuereinheit einschließlich Festwertspeicher 24, Ausgangsdecodierer 40, Steuerschalter 42, Eingangsmultiplexer 32 und weiterer zugehöriger Steuerelemente ist im US-Patent No. 4 078 152 ausführlich beschrieben. Nur soviel der in den Fig. 3A–3C dargestellten Anordnung wird speziell beschrieben, als dies zur Ausführung des Verkettungsverfahrens für kurze Blöcke der vorliegenden Erfindung notwendig ist.

MIKROPROGRAMM-LISTE

```
(100)    ADDRESS EING. MPX LEITG. 7
         TEST EING. MPX
             WENN 1 GEHE ZU (104)
             WENN 0 WEITER

(101)    ADDRESS EING. MPX LEITG. 8
         TEST EING. MPX
             WENN 0 GEHE ZU (103)
             WENN 1 WEITER

(102)    ADDRESS MPX3 KABEL 2
         ADDRESS MPX2 KABEL 4
         SETZE SR-MASKE 001111
         GEHE ZU (105A)

(103)    ADDRESS MPX3 KABEL 2
         ADDRESS MPX2 KABEL 0
         SETZE SR-MASKE 001111
         GEHE ZU (105A)

(104)    ADDRESS MPX4 KABEL 1
         ADDRESS MPX 3 KABEL 2
         ADDRESS MPX2 KABEL 1
         SETZE SR-MASKE 001110

(105A)   LADE ZÄHLER 46
         SETZE U/D-LEITG. = 0
         ADRESS EING. MPX LEITG. 11

(105B)   SENDE SR-TAKTIMPULS
         VERMINDERE ZÄHLER 46 UM 1
         TEST EING. MPX
             WENN 0 GEHE ZU (105B)
             WENN 1 WEITER

(106)    ADDRESS EING. MPX LEITG. 7
         TEST EING. MPX
             WENN 0 GEHE ZU (108A)
             WENN 1 WEITER

(107A)   ADDRESS MPX2 KABEL 1
         SETZE SR-MASKE 001000 (mC wählt ALTREG.)
         ADDRESS EING. MPX LEITG. 9
         LADE ZÄHLER 46
         SETZE U/D-LEITG. = 1
```

0 012 974

(107B)  SENDE SR-TAKTIMPULS
        ERHÖHE ZÄHLER 46 UM 1
        TEST EING. MPX
            WENN 0 GEHE ZU (107B)
            WENN 1 WEITER

(108A)  SETZE SR-MASKE 000010 (mE wählt AUSG. REG.)
        ADDRESS EING. MPX LEITG. 9
        LADE ZÄHLER 46
        SETZE U/D-LEITG. = 1

(108B)  SENDE SR-TAKTIMPULS
        ERHÖHE ZÄHLER 46 UM 1
        TEST EING. MPX
            WENN 0 GEHE ZU (108B)
            WENN 1 GEHE ZU (37A)

Entsprechend der früheren Beschreibung von Fig. 2 verläuft die Steuerung vom Mikroprogramm-Schritt (35) im genannten Patent zum Schritt (100) der vorliegenden Beschreibung. Das Eingangsregister enthält in diesem Zeitpunkt den neuen kurzen Block X oder Y zur Chiffrierung bzw. Dechiffrierung, das Altregister enthält das laufende Verkettungswort V und das $\pi$-Block E/A Register den Chiffreausdruck W des laufenden Verkettungswortes V.

Im ersten Schritt (100) wird der Eingangsmultiplexer zur Adressierung der Leitung 7 veranlaßt. Diese Leitung »ohne Verkettung« wird bei einem Start des Verfahrens beaufschlagt (oder nicht). Lautet die Betriebssteuerung »ohne Verkettung«, dann erscheint auf Leitung 34 nach dem im Multiplexer 32 durchgeführten Test eine logische »1«. Dies bedeutet, daß im Speicheradreßregister 26 (MAR) eine Verzweigungsadresse gespeichert wird, die in den Festspeicher 24 (ROM) überführt wird, so daß das Verfahren jetzt zum Schritt (104) übergeht. Steht auf der Leitung 34 eine logische »0«, was Verkettung bedeutet, dann geht das Verfahren zum nächsten Schritt im Festwertspeicher über, wobei die vormalige Adresse im Speicheradreßregister 26 um 1 erhöht wird. Folgt nun aber der Schritt (101), dann wird im Eingangsmultiplexer 32 zuerst die Leitung 8 angesteuert, um dabei über Chiffrier- oder Dechiffrieroperation zu entscheiden. Wie beim Schritt (100) erscheint aufgrund dieser Prüfung der Leitung 8 ein Signal auf Leitung 34. Weist diese eine logische »0« auf, dann ist Dechiffrierung verlangt, und es geht weiter zum Schritt (103). Zeigt die Leitung 34 aber eine »1« an, dann ist Chiffrierung gefordert, und es geht weiter zu Schritt (102).

Beim Schritt (102) bewirkt der aufgerufene Mikrobefehl im Festwertspeicher, daß über die Steuerschalter 42 Kabel No. 2 in MPX3 und Kabel No. 4 in MPX2 ausgewählt werden. Gleichzeitig wird durch die Steuerungsschaltung 42 aber auch eine Schieberegister (SR)-Maske mit der Aufstellung 001111 über das entsprechende Kabel ausgegeben. Dies bedeutet je ein Eingangssignal der Leitungen mC, mD, mE und mF für vier der sechs UND-Tore A-0 bis A-5 unterhalb des Ausgangsregisters 14 in Fig. 3C. Dadurch werden die folgenden SR-Taktimpulse über die Leitungen C, D, E und F weitergeleitet, wobei die Schiebeoperationen im Altregister, im Eingangsregister, im Ausgangsregister bzw. im $\pi$-Block E/A Register in Gang gesetzt werden. Bei Abschluß dieses Schrittes geht es zum Schritt (105A).

Wäre nach Schritt (101) zum Schritt (103) verzweigt worden, dann hätte sich eine dem Schritt (102) ähnliche Operation abgespielt, wobei die Steuerungsschalter 42 das Kabel No. 2 von MPX3 und das Kabel No. 0 von MPX2 angesteuert hätten. Das Kabel SR-Maske git nun wie beim Schritt (102) dieselbe Signalaufstellung ab, nämlich 001111. Daher erhalten auch dieselben Register Schiebe-Steuerimpulse zur Ausführung der in den Kästen 102 und 103 aufgezeichneten Operationen des Flußdiagramms. In beiden Fällen empfängt das Ausgangsregister die Ausgabewerte der EX-O-Funktion für den Inhalt des Eingangsregisters und des $\pi$-Block E/A-Registers. Aber gemäß Kasten 102 empfängt das Altregister dieselben Eingangssignale wie das Ausgangsregister. Im Gegensatz hierzu empfängt das Altregister gemäß Kasten 103, nachdem ein anderes Kabel von MPX2 angesteuert worden ist, den Inhalt des Eingangsregisters, wie dies für Dechiffrierung und daher auch zur Vorbereitung des Altregisters im Hinblick auf die Eingliederung von Y in das neue Verkettungswort V' erforderlich ist. Nach Beendigung des Schrittes (103) folgt Schritt (105A).

Es wird jetzt angenommen, daß die Prüfung im Schritt (100) ergeben hat »keine Verkettung«, so daß Schritt (104) anschließt. Der erste Befehl dieses Schrittes bewirkt, daß über das Ausgabekabel der Steuerschalter 42 Kabel No. 1 von MPX4, Kabel No. 2 von MPX3 und Kabel No. 1 von MPX2 angesteuert werden. Diese Auswahl bestimmt den Datenweg, wobei der Inhalt des Eingangsregisters mit jenem des Altregisters der EX-O-Funktion zugeführt wird. Ursprünglich enthielt das Altregister gemäß dem US-Patent No. 4 078 152 den Chiffreausdruck einer Größe, die im K2-Register gespeichert war. Das Resultat der EX-O-Funktion wird in das Altregister zurückgebracht, und die Wahl von MPX2 bewirkt, das auch der frühere Inhalt des Altregisters nochmals in dieses zurückgespeichert wird. Der Schritt (104) bestimmt, daß außerdem das Kabel SR-Maske eine Signalaufstellung 001110 abgibt, was die

9

Altregister, Eingangsregister und Ausgangsregister zu Empfängern von SR-Taktimpulsen während des Schrittes (105) macht.

Der Schritt (105A) wird in zwei Teilen abgewickelt, wobei der Teilschritt (105A) die Steuerleitung für die Ausführung bereitstellt und der Teilschritt (105B) als Steuerschleife das aufeinanderfolgende Verschieben der Bytes im jeweiligen Register ermöglicht. Beim Verschieben wird gleichzeitig der Stand des Zählers 46 geprüft, um festzustellen, ob bereits die geforderte Anzahl Verschiebungen stattgefunden hat. Im Teilschritt (105A) wird der Zähler 46 mit der Zahl n geladen, die früher in das Kopierregister 48 eingegeben worden war. Außerdem wird die U/D-Steuerleitung auf »0« gesetzt, was zum Herabsetzen des Zählerstandes bei jedem eintreffenden Impuls CP1 führt. Zugleich wird auch die Leitung No. 11 des Eingangs-Multiplexers angesteuert, wodurch eine im Festwertspeicher (ROM) 24 vorhandene Schrittfolge prüfen kann, wann der Zählerstand Null erreicht. Die Beendigung des Teilschrittes (105A) löst den Start des Teilschrittes (105B) aus. Dabei wird die Abgabe eines SR-Taktimpulses durch die monostabile Kippschaltung (SS) 43 über die SR-Taktleitung an alle UND-Tore A-0 bis A-5 der Fig. 3C ausgelöst, um die vorgängig durch die SR-Maske ausgewählten Register zu erregen. In den Schrittfolgen (102), (103) und (104) werden also jeweils die speziellen Maskensignale aufgrund der erforderlichen Operationen ausgewählt. Der nächste Mikrobefehl des Schrittes (105B) vermindert den Stand im Zähler 46 über die Leitung CP1. Jetzt wird Leitung 11 des Eingangs-Multiplexers geprüft. Hat der Zählerstand Null erreicht, dann führt diese Leitung eine logische »1«, was bedeutet, daß die erforderliche Zahl n Schiebeoperationen abgewickelt wurde. Damit wäre Schritt (105) beendet, und es folgt Schritt (106). Ist der Zählerstand Null noch nicht erreicht, dann steht Leitung 11 auf logisch »0« und Schritt (105B) wird wiederholt.

Durch den Schritt (106) wird Leitung 7 des Eingangs-Multiplexers 32 abgefragt, ob eine Operation »ohne Verkettung« im Gang ist. Führt die Leitung 7 eine Null, was Verkettung bedeutet, dann geht es weiter zum Schritt (108A). Andernfalls führt Leitung 7 eine logische »1«, die »ohne Verkettung« aussagt und zum Schritt (107A) weiterführt.

Wenn also keine Verkettung verlangt ist, dann werden im Schritt (107A) die Steuerschalter 42 dazu veranlaßt, das Kabel No. 1 vom MPX2 anzusteuern. Die SR-Maske wird auf 001000 eingestellt. Dadurch wird die C-Schiebeleitung beaufschlagt und Schiebeimpulse an das Altregister gerichtet. Gleichzeitig wird aber auch die Leitung 9 zum Eingangs-Multiplexer 32 angesteuert, und endlich wird noch die Zahl n in den Zähler 46 gesetzt sowie die U/D-Leitung mit einer »1« belegt, so daß der Zählerstand um jeden eintreffenden Impuls CP1 erhöht wird. Damit ist folgendes erreicht: das Altregister ist mit seinen Steuerkreisen in den Stand versetzt, eine Verschiebung seines Inhalts um 8 Bytes innerhalb des Registers vorzunehmen und sich selber den vormaligen Speicherinhalt vollständig wieder einzugeben, wie dies bereits gemäß Kasten 104 des Flußdiagramms geschehen ist. Damit wurde die im Altregister abgespeicherte Konstante bei dieser Betriebsart wieder vollständig an ihren eigenen Platz zurückgeschoben. Durch den auf die Zahl n eingestellten Zähler, dessen Stand sich jeweils erhöht, wird beim Erreichen des Wertes 8 ein Übertrag erzeugt, wie im genannten Patent erläutert ist.

Die Taktsequenz des Schrittes (107B) ist eine Steuerschleife, welche den Registern erlaubt, Schiebeoperationen auszuführen bis die Zahl (8−n) erreicht ist. Der Schritt (107B) bewirkt zuerst, daß ein SR-Taktimpuls über den Ausgangsdecodierer 40 an die UND-Tore der Fig. 3C abgegeben wird. Der Impuls gelangt schließlich über die Leitung C an das Altregister und löst eine Schiebeoperation aus. Gleichzeitig wird der Stand im Zähler 46 erhöht und automatisch die Leitung 9 abgefragt, um deren Zustand »0« oder »1« zu erfahren. Eine Null bedeutet, daß die erforderliche Zahl Schiebeoperationen noch nicht ausgeführt worden ist. Darauf beginnt das Verfahren wieder am Anfang des Schrittes (107B). Eine Eins bedeutet hingegen, daß man nun zum Schritt (108) übergehen und mit (108A) beginnen kann.

Gemäß dem Kasten 108 werden jetzt die eben aufgestellten n Bytes Chiffretext Y oder Klartext X im Altregister nach (8−n) Positionen rechts-bündig eingerichtet. Dies beginnt damit, daß über die SR-Maskenleitung von den Steuerschaltern 42 eine Signalaufstellung 000010 abgegeben wird. So wird die E-Leitung vorbereitet, die im Ausgangsregister Schiebeoperationen auslöst, sobald sie während des Teilschrittes (108B) von der SR-Taktleitung einen Impuls empfängt. Es ist nicht notwendig, einen der Multiplexer 1−4 auszuwählen, da es sich hier lediglich um eine Schiebeoperation in einem Register handelt. Aber da (8−n) mal geschoben werden muß, wird die Leitung 9 des Eingangs-Multiplexers 32 angesteuert und die Zahl n in den Zähler 46 gesetzt. Gleichzeitig wird die U/D-Leitung auf logisch »1« gesetzt, so daß der Zählerstand erhöht werden kann. Weiter geht es nun mit dem Teilschritt (108B), der eine Schleife für Schiebeoperationen darstellt wie die Schritte (107B), (105B), usw. Vom Ausgangsdecodierer 40 wird jetzt ein SR-Taktimpuls abgegeben, der an das UND-Tor A-0 gelangt und im Ausgangsregister eine 1-Byte-Schiebeoperation auslöst. Der Stand im Zähler 46 wird erhöht und der Zustand der Leitung 9 zum Eingangsmultiplexer 32 abgefragt. Ist letzterer gleich »0«, was bedeutet, daß noch nicht genügend Schiebeoperationen stattgefunden haben, um einen Übertrag zu erzeugen, dann beginnt der Verfahrensablauf erneut beim Schritt (108B). Liegt jedoch auf der Leitung 9 eine »1« vor, dann setzt sich das Verfahren beim Schritt (37A) gemäß dem besagten Patent fort, wobei die n Bytes des dank dem Verfahren bereitgestellten, kurzen Blockes aus dem Ausgangsregister ausgegeben werden. Die speziellen Operationen gemäß Kasten 37 sind dieselben wie im Kasten 108, ausgenommen daß nach der Eingabe der Zahl n in den Zähler 46 die

**0 012 974**

Leitung 11 statt der Leitung 9 abgefragt wird und daß die U/D-Leitung auf »0« gesetzt wird, weshalb der Zählerstand jeweils vermindert wird. Für eine spezielle Beschreibung hierzu wird wieder auf das US-Patent No. 4 078 152 verwiesen, dessen Verfahren nun die weitere Steuerung wieder voll übernimmt.

Es ist daran zu denken, daß das Altregister 12 in diesem Zeitpunkt ein neues »laufendes« Verkettungswort enthält, das im weiteren Verfahren brauchbar ist, unabhängig davon ob im Datenstrom als nächstes ein »Satzende«, ein kurzer Block oder ein voller Block auftritt. Dieses im Altregister befindliche Verkettungswort stellt also die letzten 8 Bytes eines chiffrierten Texts Y dar, den die Einrichtung produziert hat, wenn wenigstens 8 Bytes verarbeitet worden sind. Andernfalls sind es weniger als 8 Bytes bearbeiteter Chiffretext, dem genügend letzte Bytes des Erstverkettungswortes vorangehen, um das Total von 8 Bytes zu erreichen.

Das hier erläuterte erfinderische Verfahren zur Chiffrierung und Verkettung von Daten, bzw. deren Dechiffrierung, beim Auftreten kürzerer Blöcke als sonst üblich ist in jeder Blockchiffre-Anlage anwendbar, und besonders dort wo hohe Datensicherheit verlangt wird. Das trifft auf die Datenübermittlung zu, die leicht angezapft werden kann, oder auf große Dateien, bei denen unerlaubter Zugriff nicht so leicht abzuwehren ist. Auch in der Anwendung der immer zahlreicher werdenden Kreditkarten im Warenverkauf und bei Banken treten Probleme der Datensicherheit auf, für welche die vorliegende Erfindung eine mögliche Lösung darstellt.

## Patentansprüche

1. Verfahren zur Chiffrierung von Datenblöcken X einer vorgegebenen maximalen Länge $L^{(f)}$ in Funktion eines Chiffrierschlüssels zwecks Bildung chiffrierter Blöcke Y mit jeweils gleicher Länge, unter Verwendung eines von den zuvor chiffrierten Daten abhängigen Verkettungswortes V, welches dem zuletzt ausgegebenen chiffrierten Block Y entspricht, wenn dieser die volle Blocklänge $L^{(f)}$ hatte, dadurch gekennzeichnet, daß bei Vorliegen eines Eingangsdatenblocks $X_i$ dann, wenn die Länge $L^{(s)}$ des zuletzt vorher ausgegebenen chiffrierten Blockes $Y_{i-1}$ kürzer als die volle Blocklänge $L^{(f)}$ war, als Verkettungswort $V_1$ des laufenden Chiffrierschrittes ein zusammenhängender Abschnitt der verketteten, zuletzt vorher ausgegebenen chiffrierten Daten verwendet wird, dessen Länge der vollen Blocklänge $L^{(f)}$ entspricht.

2. Verfahren nach Anspruch 1, dadurch gekennzeichnet, daß der gerade in der Ausgabe erscheinende Chiffreblock $Y_i$ von n Bytes Länge mit dem vorgängig erschienenen und zuletzt verwendeten Verkettungswort $V_i'_{-1} = V_i$ zwecks Bildung eines neuen Verkettungswortes $V_i'$ verbunden wird, welch letzteres beim nächsten Chiffriervorgang als Verkettungswort $V_{i+1}$ verwendet wird, und daß diese Verbindung durch Ausmerzen der n ältesten Bytes im zuletzt benutzten Verkettungswort $V_i$ beim Einschieben des Chiffreblocks $Y_i$ auf die volle Blocklänge $L^{(f)}$ gebracht wird.

3. Verfahren nach Anspruch 2, dadurch gekennzeichnet, daß beim Beginn der Chiffrieroperationen ein vorgegebenes Erstverkettungswort (ICV) benutzt wird.

## Claims

1. Method für enciphering data blocks X of a given maximum length $L^{(f)}$ as a function of a ciphering key, for generating enciphered blocks Y of equal lengths, using a chaining word V which depends on the previously enciphered data, and which corresponds to the last issued enciphered block Y if this had the full block length $L^{(f)}$, characterized in that when an input data block $X_i$ is present, and if the length $L^{(s)}$ of the last issued enciphered block $Y_{i-1}$ was shorter than the full block length $L^{(f)}$, then a continuous section of the chained previously issued enciphered data, the length of which corresponds to the full block length $L^{(f)}$, is used as a chaining word $V_i$ for the current enciphering step.

2. Method in accordance with claim 1, characterized in that the cipher block $Y_i$ of n bytes length which currently appears at the output is combined with the previously appeared and last used chaining word $V'_{i-1} = V_i$ for generating a new chaining word $V'_i$, which will be used during the next enciphering step as chaining word $V_{i+1}$, and that this combination is made to have full block length $L^{(f)}$ by eliminating the n oldest bytes in the last used chaining word $V_i$ when cipher block $Y_i$ is shifted in.

3. Method in accordance with claim 2, characterized in that at the beginning of the enciphering operation a given initial chaining word (ICV) used.

## Revendications

1. Procédé pour le chiffrement de blocs de données X de longueur maximale $L^{(f)}$ en fonction d'un code de chiffrement en vue de former des blocs chiffrés Y présentant tous la même longueur, avec utilisation d'un mot de chaînage V dépendant des données préalablement chiffrées, qui correspond au bloc chiffré Y dernier fourni si celui-ci avait la longueur de bloc $L^{(f)}$, caractérisé en ce que, en présence d'un bloc de données d'entrée $X_i$ et si la longueur $L^{(s)}$ du bloc chiffré $Y_{i-1}$ dernier fourni, était plus courte que la longueur de bloc $L^{(f)}$ on utilise alors, comme mot de chaînage $V_i$ de l'étape de chiffrement en cours, une section contunue des dernières données chaînées et chiffrées, et dont la longueur correspond à la longueur de bloc $L^{(f)}$.

2. Procédé selon la revendication 1, caractérisé en ce que le bloc chiffré $Y_i$ d'une longueur de n octets fourni en sortie, est combiné au mot de chaînage $V'_{i-1} = V_i$ fourni précédemment et utilisé en dernier en vue de former un nouveau mot de chaînage $V'_i$ lequel est utilisé comme mot de chaînage $V_{i+1}$, lors de l'étape de chiffrement suivante et en ce que cette combinaison est réalisée pour obtenir la longueur de bloc $L^{(f)}$ par la suppression des n octets les plus anciens dans le mot de chaînage $V_i$ utilisé en dernier lors de l'introduction du bloc chiffré $Y_i$.

3. Procédé selon la revendication 2, caractérisé en ce que l'on utilise, au début des opérations de chiffrement, un mot de chaînage de base pré-établi (ICV).

# FIG. 1A

## CHIFFRIERLÄNGE 8 BYTES

# FIG. 1B

## DECHIFFRIERLÄNGE 8 BYTES

# FIG. 1C

## CHIFFRIERLÄNGE < 8 BYTES

# FIG. 1D

## DECHIFFRIERLÄNGE < 8 BYTES

FIG. 1E

0 012 974

0 012 974

FIG. 2

| FIG. 2A |
| FIG. 2B |

FIG. 2 A

B — KURZER BLOCK MIT n BYTES

SETZE n IN KOPIER — REG. — 30

VERKETTUNG ? — 31 — NEIN / JA

US.P 4.078.152
FIG. 1D

$\pi$ BLOCK E/A REG ←
W AUS ALTREG.
ALTREG. ← ALTREG. — 32

$\pi_k + 1$ VORGANG — 33

SCHIEBE IM REG.
8 − n STELLEN N.LKS. — 35

KEINE VERKETTUNG ? — 100 — JA / NEIN

CHIFFRIERG. ? — 101 — JA / NEIN

BESTIMME DATENWEGE:

**102**

ALTREG. ⟵
EING. REG. ⊕ π
BLOCK E/A REG.

AUSG. REG. ⟵
EING. REG. ⊕ π
BLOCK E/A REG.

**103**

AUSG. REG. ⟵
EING. REG. ⊕ π
BLOCK E/A REG.

ALTREG. ⟵
EING. REG.

**104**

AUSG. REG. ⟵
EING. REG. ⊕
ALTREG.

ALTREG. ⟵
ALTREG.

**105**

SCHIEBE GEWÄHLTE
REGISTER n MAL

**106**

KEINE
VERKETTUNG
?

JA

NEIN

**107**

ALTREG. ⟵
SCHIEBE ALTREG.
8−n MAL N. LINKS

**FIG. 2B**

**108**

SCHIEBE AUSG. REG. 8−n MAL
NACH RECHTS OHNE D. TAKT

US.P. 4.078.152
FIG. 1D

AUSG. n DATENBYTES VON
AUSG. REG. MIT DATENTAKT

**37**

C RÜCKFÜHRG.
D. KURZEN BLOCKS

# FIG. 3C

FIG. 3

| FIG. 3A | FIG |
|---------|-----|
| FIG. 3B | 3C |

FIG. 3A

FIG. 3B

$\pi_K \pm 1$ BLOCK – (DE) CHIFFRIERUNG

$\pi$ BLOCK E/A REG. — 50

0 012 974